# EUROPÄISCHE PATENTANMELDUNG

(11) **EP 1 289 323 A2**
(43) Veröffentlichungstag der Anmeldung: **05.03.2003**
(21) Anmeldenummer: 02102228.0
(22) Anmeldetag: 28.08.2002
(51) Int. Cl.: H04Q 7/26

(54) **Digitales Hausnetzwerk und Verfahren zur Zuordnung drahtloser Endgeräte zu Basisstationen**

(30) Priorität: 30.08.2001 DE 10142392
(71) Anmelder: Philips Corporate Intellectual Property GmbH, 20099 Hamburg (DE); Koninklijke Philips Electronics N.V., 5621 BA Eindhoven (NL)
(72) Erfinder: Goedicke, Andreas, 52088 Aachen (DE); Müsch, Guido, 52088 Aachen (DE); Baldus, Heribert, Dr., 52088 Aachen (DE)
(74) Vertreter: Volmer, Georg, Dipl.-Ing.

(57) **Zusammenfassung**

Die Erfindung betrifft ein Verfahren und eine Vorrichtung zur dynamischen Zuordnung mobiler Endgeräte (E1, En) zu einer von mehreren Basisstationen (B1, B2, Bm) in einem digitalen Hausnetzwerk. Das Verfahren ist dadurch gekennzeichnet, dass es verteilt auf jeder Basisstation (B1, B2, Bm) autonom ausgeführt wird. Die Basisstationen messen zu diesem Zweck die Verbindungsstärken zwischen ihnen und den in ihrer Reichweite befindlichen Endgeräten (E1, En) und teilen die so gewonnenen Messwerte in einer Rundsendung allen anderen Basisstationen mit. Alle Basisstationen können dann aufgrund der gewonnenen globalen Informationen nach einem vorgegebenem Algorithmus, zum Beispiel einer Zuordnung des Endgerätes zu größten Verbindungsstärke unter Berücksichtigung einer Hysterese und eines Schwellwertes, eine Zuordnung von Endgeräten zu Basisstationen berechnen. Sofern die neu berechnete Zuordnung sich gegenüber der bestehenden Zuordnung geändert hat, sendet eine Basisstation ein handover-Kommando an alle Basisstationen, welches dann die entsprechenden Übernahmeaktionen auslöst. Durch die verteilte Ausführung des Verfahrens wird eine hohe Ausfallsicherheit erreicht, wobei das verwendete Verfahren gleichzeitig verhältnismäßig einfach zu implementieren ist.

## Beschreibung

Die Erfindung betrifft ein Verfahren zur Zuordnung drahtloser Endgeräte in digitalen Hausnetzwerken, wobei die Verbindungsstärken zwischen den Basisstationen und den Endgeräten gemessen werden und in Abhängigkeit von diesen Messwerten sowie gegebenenfalls von einer bereits bestehenden Zuordnung jedes Endgerät genau einer Basisstation zugeordnet wird.

Ferner betrifft die Erfindung ein digitales Hausnetzwerk mit mehreren Basisstationen und mehreren drahtlosen Endgeräten, wobei die Basisstationen enthalten:
a) eine Drahtlos-Kommunikationseinheit für eine drahtlose Kommunikation der Basisstation mit Endgeräten;
b) eine Drahtgebunden-Kommunikationseinheit für eine drahtgebundene Kommunikation der Basisstationen untereinander;
c) eine Messeinheit zur Feststellung der Verbindungsstärken zu den in Reichweite der Basisstation befindlichen Endgeräten.

Zukünftige digitale Hausnetzwerke werden typischerweise sowohl aus mehreren ortsgebundenen Geräten wie zum Beispiel Fernsehen (TV), Videorecorder (VCR) oder Tuner als auch aus mehreren mobilen Geräten wie Personal Digital Assistenten (PDA) oder Web-Pads bestehen. Während bei den ortsgebundenen Geräten die Netzwerkanbindung vornehmlich kabelbasiert erfolgt, ist die Anbindung der mobilen Geräte an das Netzwerk drahtlos mittels einer Funk- oder Infrarotverbindung zu sogenannten Basisstationen realisiert. Nachfolgend sollen unter einer "Basisstation" sowohl Zugangspunkte, die eine bloße Kopplung zwischen dem verdrahtetem Netz und dem mobilen Endgerät bieten, als auch Basisstationen im engeren Sinne, welche zusätzliche Aufgaben wie etwa die Datenvorverarbeitung übernehmen, verstanden werden. Die permanente und gleichzeitige Verfügbarkeit aller Basisstationen ist nicht unbedingt erforderlich. Insbesondere können die Basisstationen selbst nur Bestandteile anderer Geräte sein, welche jederzeit ein- oder ausgeschaltet werden können.

Die mobilen Endgeräte werden zunehmend solche sein, welche Zugang zu Anwendungen mit hohen Datenraten bieten, beispielsweise zu Anwendungen im Bereich TV, Video, mobile Videokonferenz, Überwachung oder High-End Spiel. Derartige mobile Endgeräte werden nachfolgend auch als "Personal Infotainment Assistents" (PIA) bezeichnet.

Prinzipiell wäre es möglich, die Anbindung aller mobilen Endgeräte an ein Hausnetzwerk über eine einzige "zentral" positionierte Basisstation vorzunehmen. Praktisch hat dieser Ansatz jedoch den Nachteil, dass die Sendeleistung dieser Basisstation äußerst hoch sein müsste, um alle Räume eines Hauses zu erreichen und viele verschiedene Endgeräte gleichzeitig mit Daten zu versorgen. Aus diesem Grunde ist es bevorzugt, mehrere Basisstationen räumlich verteilt im Netzwerk anzuordnen. Dabei ist dann dafür Sorge zu tragen, dass ein Endgerät zu einem gegebenen Zeitpunkt genau einer dieser Basisstationen zugeordnet ist, um eine korrekte und eindeutige Kommunikation zwischen dem Endgerät und dem Netzwerk zu ermöglichen. Die Zuordnung zwischen Endgeräten und Basisstationen erfolgt in diesem Falle dynamisch in Abhängigkeit von der räumlichen Position des Endgerätes und der daraus resultierenden Verbindungsstärke zu den jeweiligen Basisstationen. Bei einer Ortsveränderung eines Endgerätes relativ zu den Basisstationen kann es dann vorkommen, dass sich die Zuordnung dieses Endgerätes ändert, das heißt, dass es von einer ursprünglichen Basisstation zu trennen und mit einer anderen Basisstation, in deren Reichweite das Gerät gelangt, zu verbinden ist. Die Überleitung einer laufenden Datenübertragung zwischen dem Netzwerk und dem Endgerät von einer Basisstation auf eine andere wird dabei mit dem Ausdruck "handover" bezeichnet.

Verfahren zur Zuordnung von mobilen Endgeräten zu wechselnden Basisstationen sind aus öffentlichen Telefonnetzen (GSM etc.) sowie drahtlosen Computernetzen (IEEE 802.11) bekannt. Diese Verfahren werden von einer zentralen Instanz gesteuert, welche bei GSM im Netzwerk oder bei dem IEEE 802.11 Standard auf dem mobilen Endgerät realisiert ist.

Vor diesem Hintergrund war es Aufgabe der vorliegenden Erfindung, ein Verfahren zur Zuordnung drahtloser Endgeräte zu Basisstationen in einem digitalen Hausnetzwerk bereitzustellen, welches eine hohe Funktionssicherheit aufweist und verhältnismäßig kostengünstig zu realisieren ist.

Diese Aufgabe wird durch ein Verfahren mit den Merkmalen des Anspruchs 1 sowie ein digitales Hausnetzwerk mit den Merkmalen des Anspruchs 10 gelöst. Vorteilhafte Ausgestaltungen sind in den Unteransprüchen enthalten.

Bei dem Verfahren zur Zuordnung drahtloser Endgeräte zu Basisstationen in einem digitalen Hausnetzwerk werden die Verbindungsstärken zwischen den Basisstationen und den Endgeräten gemessen, und in Abhängigkeit von den so gewonnenen Messwerten sowie - falls vorhanden - einer bereits bestehenden Zuordnung zwischen Endgeräten und Basisstationen wird jedes Endgerät genau einer Basisstation zugeordnet. Die Zuordnung bewirkt, dass der nachfolgende Datenverkehr zwischen Endgerät und Netzwerk über die zugeordnete Basisstation abgewickelt wird. Kennzeichnend für das Verfahren ist, dass alle Basisstationen voneinander unabhängig auf der Grundlage derselben Informationen (d.h. der oben genannte Messwerte und der bestehenden Zuordnung) sowie nach demselben Algorithmus die Zuordnung berechnen.

Bei dem Verfahren überprüfen somit alle Basisstationen regelmäßig die Zuordnungskriterien für alle aktuell erreichbaren drahtlosen Endgeräte. Alle Basisstationen treffen dann unabhängig voneinander aktuelle Zuordnungsentscheidungen, deren Ergebnis aufgrund der Verwendung gleicher Informationen und eines gleichen Algorithmus bei allen Basisstationen dasselbe ist. Die Basisstationen koordinieren anschließend ihre Entscheidungen mittels eines Kommunikationsprotokolls untereinander. Der Vorteil dieses "verteilten" Zuordnungsverfahrens besteht in einer hohen Funktionssicherheit gegenüber einem Ausfall von Basisstationen. Bei einem solchen Ausfall bzw. Ausschalten einer Basisstation übernehmen nämlich die verbleibenden Basisstationen automatisch die Zuordnung zu den betroffenen drahtlosen Endgeräten, sofern eine solche funktechnisch grundsätzlich möglich ist. Weiterhin werden zusätzlich in das Hausnetzwerk eingeführte Basisstationen bei Inbetriebnahme automatisch in das gesamte verteilte Zuordnungsverfahren mit einbezogen. Durch den Verzicht auf eine zentrale Steuerungsinstanz ist das Verfahren in der Lage, sehr flexibel auf den Ausfall einzelner Basisstationen zu reagieren und selbständig eine Anpassung durchzuführen.

Vorzugsweise misst im Rahmen des Verfahrens jede Basisstation die Verbindungsstärken von ihr zu allen erreichbaren drahtlosen Endgeräten und teilt die so gewonnenen Messergebnisse anschließend allen übrigen Basisstationen mit. Auf diese Weise wird gewährleistet, dass alle Basisstationen im Hausnetzwerk erstens über die betriebsbereiten Basisstationen, zweitens über alle betriebsbereiten und erreichbaren Endgeräte und drittens über die Qualität der Verbindungen zwischen den Endgeräten und den Basisstationen informiert sind, so dass sie auf der Grundlage dieser globalen Informationen den globalen Zuordnungsalgorithmus ausführen können.

Gemäss einer Weiterbildung des Verfahrens wird dabei eine Basisstation von den übrigen Basisstationen als nicht verfügbar bzw. nicht betriebsbereit betrachtet, wenn für länger als eine vorgegebene Zeitdauer keine neuen Messergebnisse von dieser Basisstation mitgeteilt wurden. Ein solches Ausbleiben von Messergebnissen wird somit als Indiz dafür verstanden, dass die betreffende Basisstation nicht mehr verfügbar ist, da sie zum Beispiel ausgeschaltet wurde. Die übrigen Basisstationen können dies bei der Auswertung des Zuordnungsalgorithmus berücksichtigen und sind davor geschützt, mit veralteten Messergebnissen zu arbeiten.

Gemäss einer bevorzugten Ausgestaltung des Zuordnungsalgorithmus wird von diesem ein Endgerät einer neuen Basisstation zugeordnet, wenn die Verbindungsstärke zu dieser neuen Basisstation um ein vorgegebenes Maß besser ist als die Verbindungsstärke zu der dem Endgerät aktuell zugeordneten Basisstation. Zum Beispiel kann gefordert werden, dass die Verbindungsstärke zur neuen Basisstation um einen vorgegebenen Faktor oder um eine vorgegebene Differenz größer ist als die Verbindungsstärke zur aktuellen Basisstation. Eine derartige Zuordnung hat den Vorteil, dass sie eine Hysterese verwirklicht, welche eine instabil zwischen zwei Basisstationen pendelnde Zuordnung in dem Falle verhindert, in dem ein Endgerät von zwei Basisstationen aus gleich gut erreichbar ist.

Eine Zuordnungsvorschrift der zuletzt genannten Art kann dahingehend erweitert werden, dass das Endgerät erst dann der neuen Basisstation zugeordnet wird, wenn die Verbindungsstärke zur aktuell zugeordneten Basisstation unter einen vorgegebenen Schwellwert fällt. Auf diese Weise können unnötige Zuordnungsänderungen verhindert werden, wenn sich ein Endgerät im Überlappungsbereich zwischen zwei Basisstationen bewegt und dabei jedoch ständig in guter Reichweite zu einer der Basisstationen bleibt.

In manchen Fällen, wie etwa beim Einschalten eines Endgerätes, liegt eine Situation vor, in welcher das betreffende Endgerät aktuell noch keiner der Basisstationen zugeordnet ist. In einem solchen Fall wird dieses Endgerät vorzugsweise derjenigen Basisstation zugeordnet, zu der dieses Endgerät die größte Verbindungsstärke aufweist. Falls es zufällig mehrere Basisstationen mit einer solchen maximalen Verbindungsstärke geben sollte, so kann durch ein zusätzliches eindeutiges Kriterium eine dieser Basisstationen willkürlich ausgewählt werden, etwa diejenige mit der kleinsten individuellen Identifikationsnummer.

Wenn eine Basisstation bei der Auswertung des Zuordnungsalgorithmus einen Übergang der Zuordnung eines bestimmten Endgerätes von einer anderen Basisstation zu ihr selbst berechnet hat, sendet sie vorzugsweise ein handover-Kommando an alle Basisstationen, wobei dieses handover-Kommando die Übergabe des betreffenden Endgerätes initiiert. In dem handover-Kommando teilt die Basisstation mit, welches Endgerät welcher Basisstation neu zuzuordnen ist. Auf der Grundlage dieser Information könnten alle Basisstationen ihre Zuordnungsprotokolle aktualisieren, das heißt das betroffene Endgerät als der neuen Basisstation zugeordnet und von der alten Basisstation getrennt verbuchen. Diejenige Basisstation, welche aktuell die Verbindung zu dem Endgerät besitzt, leitet nach dem Empfang des handover-Kommandos die Trennung von diesem Endgerät ein. Weiterhin ist die Basisstation, welche das handover-Kommando ausgesendet hat, gleichzeitig auch Empfänger des von ihr selbst ausgesendeten Kommandos. Auf diesen Empfang reagiert sie mit der Einleitung der Übernahme des betroffenen Endgerätes. Durch das Absenden des handover-Kommandos von derjenigen Basisstation, welche einen Übergang eines Endgerätes zu sich selbst festgestellt hat, wird das Auftreten mehrerer konkurrierender handover-Kommandos verhindert. Durch eine synchronisierte Ausführung des handover-Kommandos durch alle Basisstationen einschließlich des Senders selbst wird ferner eine korrekte zeitliche Abwicklung des handovers gewährleistet.

Gemäss einer Weiterbildung des Zuordnungsverfahrens wird die Zuordnung eines Endgerätes zu einer Basisstation davon abhängig gemacht, welche Belastungen hinsichtlich des Datenverkehrs an den Basisstationen vorliegen. Auf diese Weise kann dafür gesorgt werden, dass die Datenübertragung möglichst gleichmäßig zwischen den verschiedenen Basisstationen verteilt wird, sofern dies aufgrund der funktechnischen Verhältnisse möglich ist.

Im Rahmen des oben erläuterten Verfahrens werden zwischen den Endgeräten und den Basisstationen vorzugsweise Audio- und/oder Videosignale ausgetauscht, welche eine hohe Datenrate aufweisen.

Die Erfindung betrifft ferner ein digitales Hausnetzwerk mit mehreren Basisstationen und mit mehreren drahtlosen Endgeräten, wobei jede Basisstation folgende Elemente enthält:
a) eine Drahtlos-Kommunikationseinheit für eine drahtlose Kommunikation der Basisstation mit Endgeräten;
b) eine Drahtgebunden-Kommunikationseinheit für eine drahtgebundene Kommunikation der Basisstationen untereinander;
c) eine Messeinheit zur Feststellung der Verbindungsstärken zu den in Reichweite der Basisstation befindlichen Endgeräten.
d) einen Speicher zur Speicherung von Verbindungsstärken und Zuordnungen zwischen den Basisstationen und den Endgeräten;
e) eine Steuereinheit zur Berechnung einer Zuordnung der Endgeräte zu den Basisstationen gemäss einem Verfahren der oben erläuterten Art.

In dem beschriebenen digitalen Hausnetzwerk weist somit jede Basisstation eine Steuereinheit auf, welche zur Ausführung eines bestimmten, auf allen Basisstationen gleichen Zuordnungsalgorithmus eingerichtet ist. Dieser Zuordnungsalgorithmus kann dabei auf im Speicher der Basisstation abgelegte Informationen über die Verbindungsstärken und Zuordnungen zwischen allen Basisstationen und allen Endgeräten zugreifen. Der Vorteil eines solchen Hausnetzwerkes liegt darin, dass dieses robust gegenüber dem Wegfall einzelner Basisstationen ist und auch flexibel auf ein erneutes Hinzutreten von Basisstationen in das Hausnetzwerk reagieren kann.

Im Folgenden wird die Erfindung mit Hilfe der Figuren beispielhaft erläutert. Es zeigt:
- Figur 1: schematisch ein System aus mehreren Basisstationen eines Hausnetzwerkes und mehreren mobilen drahtlosen Endgeräten;
- Figur 2: schematisch die Kommunikation von Daten zwischen den Basisstationen des Hausnetzwerkes;
- Figur 3: die Verbindungsstärken eines mobilen Endgerätes zu zwei verschiedenen Basisstationen in Abhängigkeit von der Position des Endgerätes;
- Figur 4: ein Zeitdiagramm betreffend eine kritische Kommunikationsphase zwischen zwei Basisstationen;
- Figur 5: schematisch die Komponenten einer erfindungsgemäßen Basisstation.

Das nachfolgend erläuterte Zuordnungsverfahren für ein digitales Hausnetzwerk basiert auf den folgenden grundlegenden Annahmen:
- Aufgrund des Anwendungsfeldes in einem digitalen Hausnetzwerk (IHDN) ist die Anzahl der zugrundeliegenden Basisstationen und mobilen Endgeräte verhältnismäßig gering.
- Die Basisstationen sind im IHDN durch Verdrahtung miteinander verbunden, während die mobilen Endgeräte drahtlos, zum Beispiel per Funk oder Infrarot an die Basisstationen gekoppelt sind.
- Es gibt keine ausgezeichnete zentrale Steuerungseinheit (Master) im IHDN.
- Basisstationen und mobile Endgeräte bzw. PIAs sind über dauerhafte eindeutige Identifikatoren identifizierbar.
- Die Verbindung zwischen den Basisstationen untereinander kann als störungsfrei bzw. zuverlässig angesehen werden in dem Sinne, dass keine Nachrichten aufgrund eines unbemerkten Verbindungsabbruches verloren gehen.
- Die Verbindungen zwischen den Basisstationen und den Endgeräten sind aufgrund der Natur der drahtlosen Verbindung dagegen als nicht zuverlässig anzusehen.
- Sowohl die Anzahl der aktiven, betriebsbereiten Basisstationen als auch die Anzahl der aktiven, betriebsbereiten bzw. erreichbaren Endgeräte kann im Laufe der Zeit variieren, was zum Beispiel durch ein Versagen einer Basisstation oder ein normales Ein-/Ausschalten eines Endgerätes geschehen kann.
- Die Einrichtung, welche die drahtlose Verbindung einer lokalen Basisstation zu Endgeräten herstellt, liefert eine Information über die Verbindungsqualität zu allen erreichbaren Endgeräten.
- Die Ausführung eines Handovers ist getrennt von der Entscheidung über die Zuordnung zwischen den Endgeräten und den Basisstationen.

Ausgehend von diesen Voraussetzungen besteht das Ziel in der Bereitstellung eines Zuordnungsalgorithmus und eines handover Verfahrens, welche eine dynamische Zuordnung zwischen Endgeräten und Basisstationen garantieren, bei der jedes aktive Endgerät zu jedem Zeitpunkt (im Falle eines "soft-handover": wenigstens) einer Basisstation unabhängig von seiner räumlichen Position im IHDN zugeordnet ist. Ferner soll dynamisch auf die Aktivierung/Deaktivierung von mobilen Endgeräten und auf das Erscheinen/Verschwinden von Basisstationen reagiert werden. Schließlich soll anderen Anwendungen und Diensten eine Information über den aktuellen Zuordnungsstatus bereitgestellt werden, um diesen zu erlauben, bestehende (streaming) Verbindungen neu zu routen.

Zur Lösung der genannten Ziele wird erfindungsgemäß ein Verfahren für die Zuordnung und das handover bestehender Datenübertragungen mit folgenden grundlegenden Merkmalen vorgeschlagen:
- Das Verfahren wird, zum Beispiel über entsprechende Software, in den Basisstationen selbst ausgeführt; das heißt, das außer den ohnehin vorhandenen Einrichtungen keine weitere Vorrichtung im Netzwerk benötigt wird.
- Es wird ein verteilter Algorithmus zur Berechnung der Zuordnungen verwendet; das heisst, dass es keine ausgezeichnete Master-Basisstation gibt, welche die Entscheidung für alle anderen Basisstationen fällt.
- Es gibt keine zentrale Speichereinheit für die von den Basisstationen gemessenen Verbindungsstärken. Die Messungen werden vielmehr häufig zwischen den Basisstationen über ein Rundsenden (broadcast) ausgetauscht und lokal gespeichert.

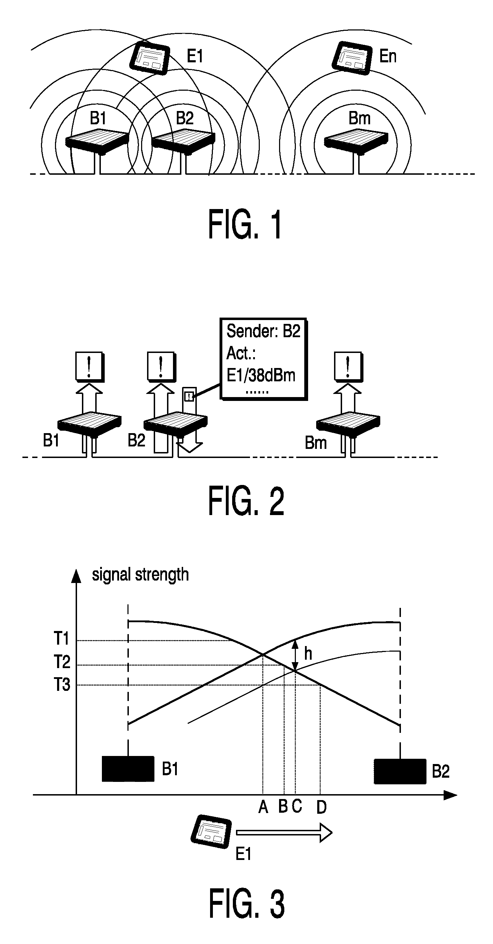

In Figur 1 ist eine schematische Ansicht der Teile eines digitalen Hausnetzwerkes IHDN dargestellt, welche von einem handover betroffen sind. Im Netzwerk sind die Basisstationen B1, B2, ... Bm untereinander durch eine Verdrahtung verbunden. Die Basisstationen stehen drahtlos in Kontakt mit mobilen Endgeräten E1, En. Während der startup Phase stellen die Basisstationen B1, B2, ... Bm eine Verbindung über einen vorgegebenen Basisstationen-Kommunikationskanal her, der vom verdrahteten Netzwerk bereitgestellt wird. Die Kommunikation erfolgt dabei nach Art des Rundsendens (broadcast), das heißt, dass die in den Rundsende-Kanal gesendeten Nachrichten von allen angeschlossenen Vorrichtungen empfangen werden.

Ferner initiieren die Basisstationen B1, B2, ... Bm häufig eine Suche, welche der mobilen Endgeräte E1, En sich innerhalb ihrer Reichweite befinden. Wenn das Signal eines Endgerätes eine untere Schwelle, zum Beispiel -70 dBm überschreitet, werden der eindeutige Identifikator des Endgerätes und das detektierte Signalniveau in einer lokalen Liste momentan aktiver Endgeräte gespeichert. Bei Figur 1 ist zum Beispiel das Endgerät E1 im (überlappenden) Empfangsbereich der Basisstationen B1 und B2 angeordnet, so dass beide Basisstationen einen Eintrag in ihren lokalen Listen für dieses Endgerät E1 machen.

Wenn nach Ablauf der startup Phase (siehe unten) Zuordnungen zwischen den Basisstationen B1, B2, ... Bm und den Endgeräten E1, En bestehen, kann es durch die Bewegung von Endgeräten zu notwendigen handover Vorgängen kommen. Wenn wie oben beschrieben alle erreichbaren aktiven Endgeräte von einer Basisstation, zum Beispiel der Basisstation B2, detektiert worden sind, sendet diese Basisstation eine Nachricht über den Rundsende-Kanal an alle anderen Basisstationen. Dieser Vorgang ist in Figur 2 schematisch dargestellt. Die gesendete Nachricht enthält eine Information über den Absender B2 sowie die detektierten Endgeräte mit deren Identifikator sowie der festgestellten Verbindungsstärke.

Da alle Basisstationen den Rundsende-Kanal abhören, empfängt auch der Sender B2 selbst seine eigene Mitteilung, so dass er ebenso wie alle anderen Basisstationen hierauf reagieren kann.

Nachdem eine derartige Nachricht von einer Basisstation empfangen wurde, aktualisiert diese sofort ihre Liste der aktuell aktiven Endgeräte. Diese Liste enthält auf diese Weise globale Informationen über den Zustand des Netzwerkes in Bezug auf alle Endgeräte. Über die von der Basisstation B2 gesendete Nachricht erhält die Basisstation Bm zum Beispiel Kenntnis vom mobilen Endgerät E1, obwohl sich dieses nicht in Reichweite von Bm befindet.

Darüber hinaus wird aus den empfangenen Nachrichten auch die Information abgeleitet, welche Basisstationen vorhanden und betriebsbereit sind. Da die in Figur 2 dargestellten Nachrichten über die Verbindungen häufig, das heißt in vorgegebenen Zeitabständen gesendet werden, kann jede Basisstation nachprüfen, ob zu erwartende Nachrichten innerhalb einer vorgegebenen Zeitdauer eintreffen oder nicht. Sollte für länger als eine festgelegte Zeitdauer keine Nachricht von einer bestimmten Basisstation mehr eintreffen, so wird daraus geschlossen, dass diese Basisstation nicht mehr betriebsbereit ist.

Basierend auf den lokal vorhandenen Informationen berechnet jede Basisstation B1, B2, ... Bm wiederholt eine neue Zuordnung zwischen den aktiven Endgeräten und den Basisstationen. Die Zuordnung geschieht dabei vorzugsweise basierend auf der relativen Verbindungsstärke und einer Hysterese, wie nachfolgend mit Hilfe von Figur 3 beschrieben werden soll.

Bei einem handover, das heißt der Überleitung einer laufenden Datenübertragung zwischen einem Endgerät und einer Basisstation auf eine andere Basisstation, kann zwischen einem "hard handover" und einem "soft handover" unterschieden werden. Ein "hard handover" tritt auf, wenn die alte Verbindung abgebrochen wird, bevor eine neue aktiviert ist. Figur 3 zeigt schematisch die Verhältnisse, die einem handover zugrunde liegen. Auf der vertikalen Achse ist die Verbindungsstärke eines mobilen Endgerätes E1 zu einer ersten Basisstation B1 bzw. einer zweiten Basisstation B2 in Abhängigkeit von der räumlichen Position (horizontale Achse) des Endgerätes relativ zu den Basisstationen aufgetragen. Mit zunehmender Entfernung von der Basisstation B1 fällt die Verbindungsstärke des Endgerätes zu dieser Basisstation, während die Verbindungsstärke zur zweiten Basisstation B2 aufgrund der Annäherung an diese gleichzeitig ansteigt.

Ausgehend von dieser Situation sind verschiedene Zuordnungs- und handover Szenarien entwickelt und in der Literatur beschrieben worden. Zum Beispiel kann im einfachsten Falle das Endgerät E1 derjenigen Basisstation zugeordnet werden, zu der die größte Verbindungsstärke besteht. Bei der Bewegung von der Basisstation B1 zur Basisstation B2 fände dabei das handover am Punkt A statt. In der Region um den Punkt A herum können allerdings aufgrund zufälliger Schwankungen der Signalstärken häufige und unnötige handover Prozeduren initiiert werden.

Das beschriebene Verfahren kann dadurch erweitert werden, dass die Verbindung zur aktuellen Basisstation nur dann aufgegeben wird, wenn die zugehörige Verbindungsstärke unter einen vorgegebenen Schwellwert fällt UND die neue Basisstation eine größere Verbindungsstärke aufweist. Wird der Schwellwert wie in Figur 3 gezeigt als T1 gewählt, so verhält sich dieses Verfahren unverändert so wie das erstgenannte Verfahren. Wird der Schwellwert dagegen bei T3 < T1 angesetzt, so kann es sein, dass das Endgerät E1 unnötig tief in den Sendebereich der zweiten Basisstation B2 eindringt, bevor beim Punkt D das handover stattfindet. Die Auswahl geeigneter Schwellwerte ist somit bei dieser Methode sehr problematisch.

Gemäß einer anderen Methode kann ein handover mit einer Hysterese vorgenommen werden. Das heißt, dass der Wechsel zur neuen Basisstation B2 nur dann stattfindet, wenn die Verbindungsstärke hierzu um eine vorgegebene Differenz h größer ist als die Verbindungsstärke zur aktuellen Basisstation B1. Diese Technik führt zu einer Hysterese und verhindert so den sogenannten "Ping-Pong Effekt" eines wiederholten handovers zwischen zwei Basisstationen im Bereich gleicher Verbindungsstärken.

Um darüber hinaus einen unnötigen Wechsel der Basisstation zu verhindern, kann der Hysterese-Ansatz mit dem bereits erläuterten Schwellwert-Ansatz kombiniert werden.

Dabei wird ein handover nur vorgenommen, wenn die Verbindungsstärke zur aktuellen Basisstation B1 unter eine vorgegebene Schwelle T2 sinkt UND die Verbindungsstärke zur neuen Basisstation um die Differenz h größer ist als die zur alten Basisstation. Gemäß Figur 3 fände der Wechsel hiernach im Punkt C statt.

Weiterhin sind handover Algorithmen bekannt, welche ihre Entscheidung auf Vorhersagen über erwartete zukünftige Werte der Verbindungsstärken basieren. Ferner können die Zuordnungsalgorithmen auch die Belastungen der jeweiligen Basisstationen mit zu unterhaltenden Verbindungen berücksichtigen, um eine möglichst gleichmäßige Lastverteilung im Netzwerk zu erzielen. Für die weitere Information über handover Verfahren sei auf die einschlägige Literatur verwiesen (z.B.: "Trends in Handover Design", Gregory P. Pollini, IEEE Communications Magazine March 1996, S.82-90; M. Gudmundson, "Analysis of Handover Algorithms", Proc. Vehicular Tech. Conf. 1991, St. Louis, MO, May 19-22, 1991, S.537-542; V. Kapoor, G. Edwards, R. Sankar, "Handorf Criteria for Personal Communication Networks", Proc. ICC 1994, New Orleans, LA, May 1-5, 1994, S.1297-1301; R. Vijayan, J. M. Holtzman, "The Dynamic Behavior of Handoff Algorithms", Proc. 1^{st} ICUPC '92, Dallas, TX, paper 2.03, Sept. 29- Oct. 2, 1992; R. Vijayan, J. M. Holtzman, "Analysis of Handover Algorithms Using Nonstationary Signal Strength Measurements", Proc. Globecom '92, Orlando, FL, paper 41.2, Dec.6-9, 1992; G. E. Corazza, D. Giancristofaro, F. Santucci, "Characterization of Handover Initialization in Cellular Mobile Radio Networks", Proc. Vehicular Tech. Conf. '94, Stockholm, Sweden, June 8-10, 1994, S.1869-72; N. Zhang, J. M. Holtzman, "Analysis of Handoff Algorithms Using Both Absolute and Relative Measurements", Proc. Vehicular Tech. Conf. '94, Stockholm, Sweden, June 8-10, 1994, S.82-86; N. Zhang, J. M. Holtzman, " Analysis of a a CDMA Soft Handoff Algorithm" Proc. PIMRC '95, Toronto, Canada, Sept. 27-29, 1995, S.819-823; G. N. Senarath D. Everitt, "Performance of Handover Priority and Queuing Systems under Different Handover Request Strategies for Microcellular Mobile Communication Systems", Proc. Vehicular Tech. Conf. '95, Chicago, IL., July 25-28, 1995, S. 897-901; D. Munoz-Rodriquez et al., "Neural Supported Hand Off Methodology in Micro Cellular Systems", Proc. Vehicular Tech. Conf. '92, Denver, CO, May 10-13, 1992, S.431-434; H. Maturino-Lozoya, D. Munoz-Rodriguez, H. Tawfik, "Pattern Recognition Techniques in Handoff and Service Area Determination", Proc.

Vehicular Tech. Conf.'94, Stockholm, Sweden, June 8-10, 1994, S.96-100; G. Liodakis, P. Stravroulakis, "A Novel Approach in Handover Initiation for Microcellular Systems", Proc. Vehicular Tech. Conf. '94, Stockholm, Sweden, June 8-10, 1994, S.1820-1823; 0. E. Kelly, V. V. Veeravalli, "A Locally Optimal Handoff Algorithm", Proc. IEEE PIMRC '95, Toronto, Canada, Sept. 27-29, 1995, S.809-813; G. P. Pollini, "A Catalog of Handover Algorithms for the Cellular Packet Switch", WINLAB Tech. Rep. TR-48, Rutgers, Jan. 1993).

Wie bereits erwähnt wurde, wird im Rahmen der vorliegenden Erfindung vorzugsweise ein handover mit Hysterese und Schwellwert eingesetzt. Wenn bei Ausführung eines solchen Zuordnungsalgorithmus eine Basisstation eine Zuordnung ermittelt, welche von der aktuellen (lokal gespeicherten, verfolgten) Zuordnung abweicht, wird ein handover initiiert. Die erste Basisstation, welche ihren Zuordnungsalgorithmus beendet und die Notwendigkeit eines handovers detektiert hat, sendet ein handover-Kommando auf dem Rundsende-Kanal an alle anderen Basisstationen. Abgesehen hiervon wird jedoch keine weitere direkte Aktivität von der Basisstation ausgeführt, und zwar auch dann nicht, wenn die sendende Basisstation selbst betroffen ist. Ferner ist wichtig, dass die Basisstationen nur in der Lage sind, einen handover eines Endgerätes an sich selbst zu initiieren. Das heißt, dass die Basisstation die Verantwortung für ein Endgerät übernehmen kann, nicht jedoch in der Lage ist, die Zuordnung zu einem Endgerät von selbst aufzugeben oder das handover eines Endgerätes an eine andere Basisstation zu initiieren. Als Konsequenz hieraus ist es für die Basisstation nicht erforderlich, die Zuordnungen zu Endgeräten, denen sie bereits zugeordnet ist, neu zu überprüfen.

Der Befehl bzw. die Nachricht zur Signalisierung eines handovers enthält den eindeutigen Identifikator des mobilen Endgerätes sowie den Identifikator der sendenden Basisstation. Wenn eine derartige Nachricht von einer Basisstation empfangen wird, reagiert sie sofort durch Aktualisierung ihrer internen Zuordnungsliste. Zusätzlich werden Mechanismen, die für das media-streaming, das re-routing usw. verantwortlich sind, lokal einerseits an der früher zugeordneten und andererseits der das Endgerät übernehmenden Basisstation aktiviert. Infolge dieser lokalen Aktivitäten beendet die früher zugeordnete Basisstation die Sendung zum mobilen Endgerät, und die neue Basisstation beginnt ihre eigene Übertragung zum Endgerät.

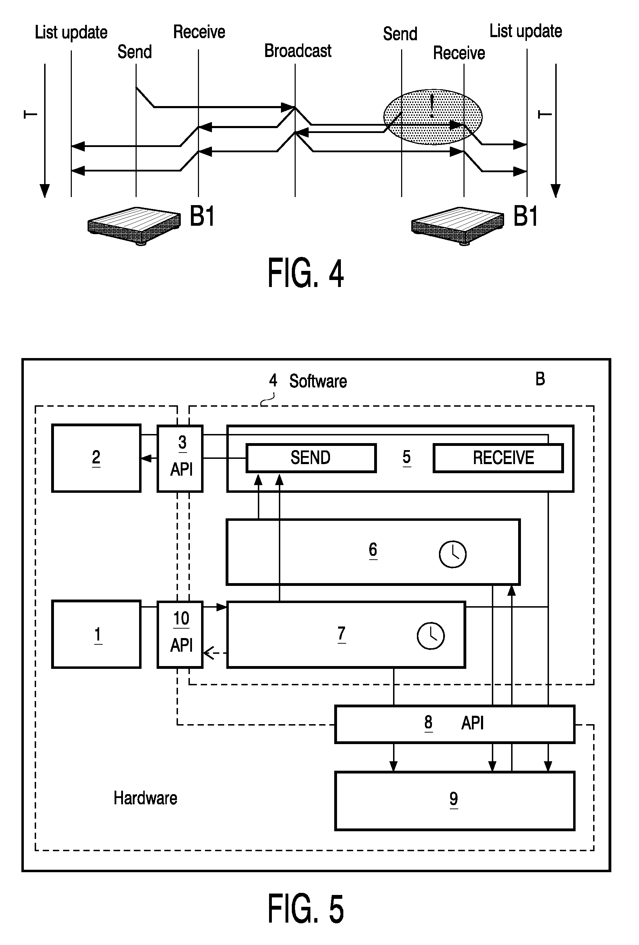

Da üblicherweise mehrere Basisstationen die Zuordnungen autonom und parallel überprüfen, kann es vorkommen, dass gleiche handover Befehle, die dasselbe Paar Endgerät/Basisstation betreffen, nacheinander von verschiedenen Quellen gesendet werden. Der Empfang des handover-Kommandos kann während dreier verschiedener Phasen stattfinden. In diesen Phasen kann die das Kommando empfangende Basisstation
1. noch nicht ihre eigene Zuordnungsroutine begonnen haben. In diesem Falle wird die nachfolgende lokale Auswertung die durchgeführte Zuordnung bestätigen, da die zugrundeliegenden Daten lokal ebenfalls präsent sind und der Zuordnungsansatz der gleiche ist.
2. die eigene Zuordnungsroutine bereits begonnen, jedoch noch nicht beendet haben. Da keine handover Entscheidungen getroffen werden, bevor die Zuordnungsberechnung vollständig beendet ist, stellt dies ebenfalls keine kritische Situation dar.
3. gerade ihre eigene Zuordnungsroutine beendet hat und beginnt, ihr eigenes (höchst wahrscheinlich gleichartiges) handover-Kommando zu senden, bevor das externe empfangen wird. Dieser problematisch erscheinende Zustand soll nachfolgend mit Bezug auf die Figur 4 näher betrachtet werden.

Figur 4 veranschaulicht die Situation unter Verwendung eines Nachrichten-Abfolgediagramms unter der Annahme, dass die erste Basisstation B1 und anschließend die zweite Basisstation B2 ihre Nachrichten senden. Dabei sei daran erinnert, dass die Basisstationen dasselbe Medium zur Kommunikation nutzen, das heißt, dass beide Nachrichten nicht zur selben Zeit gesendet werden können, sondern nur nacheinander. Wie oben erwähnt wurde, ergreifen weder die Basisstation B1 noch die Basisstation B2 irgendwelche lokalen Aktivitäten basierend auf ihrer handover Berechnung außer dem Senden des handover-Kommandos.

Nachdem Basisstation B1 ihre Nachricht auf dem Rundsende-Kanal abgeschickt hat, empfangen beide Basisstationen B1, B2 diese Nachricht und verarbeiten sie sofort. Aus diesem Grunde ist es sichergestellt, dass die zweite Nachricht von der Basisstation B2, die nachfolgend gesendet wird, ebenfalls an beiden lokalen Stationen nachfolgend behandelt wird und dass der Zuordnungszustand konsistent gehalten wird.

Ein anderer relevanter Aspekt ist die handover Synchronisation. Da das handover-Kommando auch als Synchronisation zwischen den beiden umschaltenden Ereignissen auf der früheren und auf der neu zugeordneten Basisstation dient, wird die Verzögerung zwischen diesen minimiert. Zusätzlich kann in Betracht gezogen werden, das Abschaltereignis um eine feste Zeit zu verzögern, um zu garantieren, dass ein soft handover anstelle eines hard handover ausgeführt wird.

Zusammenfassend kann festgestellt werden, dass der verteilte handover Mechanismus aus drei autonomen Prozessen besteht, welche auf jeder Basisstation ablaufen:
- Sammeln bzw. Messen von Verbindungsqualitätsdaten von allen aktiven Endgeräten innerhalb des lokalen Empfangsbereiches und Verteilen dieser Daten mit dem Rundsende-Mechanismus;
- Auswerten der lokal vorhandenen Daten, Ableiten einer zum gegebenen Zeitpunkt optimalen Zuordnung zwischen Basisstationen und Endgeräten und Initiieren geeigneter handover Aktivitäten durch Senden von handover-Kommandos über den Rundsende-Mechanismus;
- Ausführen lokaler handover Aktivitäten unmittelbar nach Empfangen eines handover-Kommandos.

Nachfolgend soll anhand eines Pseudo-Codes die Umsetzung des Ansatzes relativer Signalstärken mit Hysterese (RSSH) näher beschrieben werden. Wie oben bei der allgemeinen Erläuterung bereits beschrieben wurde, wird hierfür zunächst ein Faktor T > 1 gewählt. Ferner wird bei den Basisstationen, bei denen der Algorithmus ausgeführt wird, eine Tabelle der Verbindungsstärken-Messungen zwischen den aktuell betriebsbereiten Endgeräten und den Basisstationen sowie eine Liste der aktuellen Zuordnungen vorausgesetzt. Innerhalb der genannten Liste können einige oder sogar alle Positionen mit dem Eintrag "unbekannt" belegt sein, falls eines oder sogar mehrere mobile Endgeräte reaktiviert worden ist/sind oder falls die Basisstation selbst neu gestartet wurde. Schließlich wird auch eine Kopie dieser Liste als neue Zuordnungsliste benötigt, um die Ergebnisse der neuen Berechnung einzutragen.

Für jedes mobile Endgerät in dieser Liste, für welches die lokale Basisstation nicht die momentan zugeordnete Basisstation ist, werden dann die folgenden Schritte ausgeführt:
1. FALLS (IF) die momentan zugeordnete Basisstation bekannt, aber nicht betriebsbereit ist
   - DANN (THEN) suche die Tabelle ab nach der maximalen Verbindungsstärke, die für das betrachtete Endgerät gemessen wurde
   - FALLS die lokale Basisstation diejenige ist, die den kleinsten Identifikator aller Basisstationen hat, welche die maximale Verbindungsstärke haben, DANN wähle die lokale Basisstation als neue Zuordnung.
   - Überspringe die restlichen Schritte und fahre mit dem nächsten Endgerät fort.
2. SONST (ELSE), FALLS die aktuell zugeordnete Basisstation bekannt und betriebsbereit ist
   - FALLS es Basisstationen in der Liste gibt, deren Verbindungsstärke für das betrachtete mobile Endgerät diejenige der aktuell zugeordneten Basisstation um mehr als den Faktor T (alternativ: als ein Maß h) übersteigt
   - DANN suche die Tabelle nach der maximalen Verbindungsstärke für das betrachtete Endgerät ab
   - FALLS die lokale Basisstation diejenige mit dem kleinsten Identifikator unter den Basisstationen ist, welche das genannte Maximum zeigen, DANN wähle die lokale Basisstation als neue Zuordnung
   - Überspringe die nachfolgenden Schritte und fahre mit dem nächsten mobilen Endgerät fort.

Wie bereits erwähnt wurde, ist es den Basisstationen nur erlaubt, einen handover einer Vorrichtung an sie selbst zu initiieren. Aus diesem Grunde wird der Algorithmus nur ausgeführt, wenn die lokale Basisstation nicht bereits dem betrachteten Endgerät zugeordnet ist. Schritt 1 deckt dabei den Fall ab, dass die zuvor zugeordnete Basisstation die Bereitschaft einstellt. In dieser Situation wird versucht, die Basisstation mit der größten Verbindungsstärke dem betrachteten Endgerät zuzuordnen. Falls es mehr als einen Kandidaten hierfür gibt, wird hierunter die Basisstation mit dem kleinsten eindeutigen Identifikator ausgewählt.

Schritt 2 betrifft den Fall, dass entweder andere Basisstationen mit der aktuell zugeordneten auf der Basis des oben erläuterten Hysterese-Ansatzes konkurrieren, oder dass keine anderen geeigneten Kandidaten aktuell verfügbar sind und daher die ursprüngliche Basisstation weiterhin für das betrachtete Endgerät verantwortlich bleibt.

Eine genauere Betrachtung des bis hierher beschriebenen Algorithmus zeigt, dass es Fälle gibt, in welchen er keine Zuordnung einer Basisstation vornehmen kann. Dies passiert hauptsächlich, falls der frühere Zuordnungszustand eines Endgerätes unbekannt ist. Grund für eine solche Unkenntnis kann sein, dass
- ein neues mobiles Endgerät versucht, Verbindung zum digitalen Hausnetz herzustellen;
- die die Zuordnung ausführende Basisstation gerade neu gestartet wurde und daher nur die Verbindungsstärken-Messungen, nicht jedoch irgendeinen früheren Zustand kennt.

Ferner sei an dieser Stelle angemerkt, dass der Algorithmus nicht das Problem der Lastenverteilung löst. Um eine solche Funktionalität bereitzustellen, ist es notwendig, auch die aktuelle Ladungsverteilung für eine Neuzuordnung der Basisstationen in Betracht zuziehen. Diese zusätzliche Information kann leicht in die bereits ausgetauschten Nachrichten integriert werden. Basierend auf einer lokalen Datenbank enthaltend alle aktuellen Belastungszustände aller Basisstationen kann die auswertende Basisstation den Kandidaten mit der geringsten Last auswählen, falls zwei oder mehr Basisstationen mit ähnlicher Eignung vorhanden sind.

Nachfolgend soll die Anpassung des Algorithmus für den Fall beschrieben werden, dass Basisstationen oder mobile Endgeräte neu mit dem digitalen Hausnetzwerk verbunden werden. Beide Fälle führen zu selben Situation: Die Basisstation kennt die aktuelle Zuordnung entweder eines oder sogar aller betriebsbereiten Endgeräte nicht.

Zunächst sei die Reaktivierung eines mobilen Endgerätes betrachtet. Hierbei gibt es Fälle, in denen ein Wissen über die zuvor zugeordnete Basisstation nicht benötigt wird:
- wenn es nur eine Basisstation gibt, die das Endgerät detektiert hat, so dass keine Auswahl besteht;
- wenn es wenigsten zwei Basisstationen gibt, die das Endgerät detektieren, wobei jedoch die Differenz zwischen den gemessenen Verbindungsstärken größer als das Maß h ist, so dass die Zuordnung eindeutig vorgenommen werden kann.

Um die Notwendigkeit, den Zuordnungszustand häufig zu verteilen, oder einen zusätzlichen Nachrichtentyp (wie eine Zuordnungsanforderung) zu vermeiden, kann eine einfache Prozedur zur Lösung obigen Problems verwendet werden: Falls der aktuelle Zuordnungszustand eines mobilen Endgerätes unbekannt ist, wird der Hysterese-Mechanismus deaktiviert. Statt dessen wird einfach die beste Basisstation zugeordnet, das heißt diejenige mit der besten Verbindungsqualität. Falls diese Bedingung zu mehr als einem Kandidaten führt, wird wieder derjenige mit dem kleinsten Identifikator hieraus ausgewählt. Unter Fortsetzung des obigen Pseudo-Codes würde dieses Vorgehen wie folgt zu beschreiben sein:

### 3. SONST

- suche die Tabelle nach der maximalen Verbindungsstärke für das betrachtete Endgerät ab
- FALLS die lokale Basisstation diejenige mit dem kleinsten Identifikator unter den Basisstationen ist, welche das genannte Maximum zeigen, DANN wähle die lokale Basisstation als neue Zuordnung
- Fahre mit dem nächsten Endgerät fort.

Als Folge dieser einfachen Lösung wird das Endgerät (nach einem handover-Kommando) derjenigen Basisstation zugeordnet, welche im Verlauf ihrer Auswertung das Endgerät als erstes "entdeckt". Dies erzeugt für das Endgerät bei jeder Basisstation einen Eintrag an der Position der aktuell zugeordneten Basisstation. Als Ergebnis hiervon wird der Hysterese-Mechanismus wieder aktiviert. Es kann jedoch sein, dass aufgrund von einem vorübergehenden Mangel an Verbindungsstärken-Messungen eine Basisstation zur Überreaktionen tendiert und daher in der startup Phase einen unnötigen handover verursacht. Um eine bessere Basis für die lokale Entscheidung bereitzustellen, sollte daher wenigstens ein oder zwei Auswert-Phasen gewartet werden, bevor die erste handover Aktivität eingeleitet wird.

Da die Reaktivierung einer Basisstation nur eine Verallgemeinerung von einer unbekannten Endgerätezuordnung zu mehrfachen (lokal) unbekannten Endgerätezuordnungen ist, deckt die oben beschriebene einfache Prozedur auch dieses Ereignis ab. Dabei sei daran erinnert, dass die Zuordnungsentscheidung durch eine Basisstation nicht zu unmittelbaren lokalen Aktivitäten führt, und zwar selbst dann, wenn die Basisstation selbst betroffen ist. Daher kann keine verdeckte Aktivität vorkommen, da die Basisstation jegliche handover Aktivität durch Senden eines handover Kommandos initiieren muss.

Der häufige Austausch der Nachrichten über die Verbindungsstärken erlaubt auch die Überprüfung, ob eine Basisstation ordnungsgemäß arbeitet. Unter der Annahme, dass jede Basisstation ihren eigenen Zeitgeber hat, kann ein einfacher Mechanismus implementiert werden zur Detektion, ob die lokalen Daten (Verbindungsstärken-Messungen etc.) noch gültig sind oder nicht. Wenn eine Nachricht über den Verbindungszustand von einer Basisstation empfangen wird, wird zusammen mit ihr die lokale Zeit gespeichert (Zeitstempel). Beim Eintreten in die Auswertungsphase muss dann nur geprüft werden, ob die Differenz zwischen der aktuellen Zeit und dem gespeicherten Zeitstempel einen vordefinierten Grenzwert überschreitet. Falls dies der Fall ist, wird die Basisstation aus der internen Liste der aktiven Geräte gelöscht, und die Verbindungsstärken-Messungen werden während der nachfolgenden Auswertung nicht berücksichtigt.

Zusätzlich könnte in Betracht gezogen werden, dass weitere Aktivitäten zur Benachrichtigung anderer mit dem Hausnetzwerk verbundener Geräte über die Zustandsänderung des Systems initiiert werden. Der gleiche Mechanismus kann auch zur Überwachung der mobilen Endgeräte eingesetzt werden. Der Unterschied ist hier nur, dass der Zeit-Grenzwert großzügiger gewählt werden sollte auf Grund der unzuverlässigeren Verbindung zwischen den Basisstationen und den mobilen Endgeräten.

Der vorgeschlagene handover Mechanismus kombiniert die Vorteile der Fehlertoleranz (aufgrund des verteilten Ansatzes) und der Einfachheit, da die Kommunikation zwischen den Stationen sowie der Zuordnungsalgorithmus einfach sind. Die wichtigsten Merkmale des Mechanismus lauten wie folgt:
- Die lokal gemessenen Verbindungsqualitätsdaten werden häufig zwischen den Basisstationen über Rundsende-Nachrichten ausgetauscht.
- Basierend auf ihren lokalen Zuordnungsmechanismen sind die Basisstationen nur dazu in der Lage, ein handover eines Endgerätes an sich selbst zu initiieren.
- Handover Endscheidungen werden über entsprechende Kommandos mit Rundsende-Nachrichten verteilt.
- Lokale handover Aktivitäten (lokale Zuordnungsänderungen etc.) werden immer durch ein empfangenes handover Kommando verursacht.
- Außer den ohnehin vorhandenen Basisstationen sind keine weiteren Steuereinrichtungen notwendig.
- Die Auswahl einer Master-Basisstation ist nicht erforderlich.
- Es wird keine zentrale Speichereinheit benötigt, da alle Basisstationen ihre Daten (Verbindungsstärken, aktuelle Zuordnungen) lokal speichern.

Unter Bezugnahme auf Figur 5 soll nachfolgend der prinzipielle Aufbau einer erfindungsgemäßen Basisstation B beschrieben werden. Dabei sei als Beispiel ein HAVi (Home Audio/Video Interoperability) basiertes IHDN betrachtet. Die Basisstation B enthält hardwareseitig Interfacekarten 1 und 2, um eine Verbindung zu anderen Basisstationen bzw. zu den mobilen Endgeräten herzustellen. Ferner enthält sie eine Speichereinrichtung 9, welche permanent oder flüchtig sein kann.

Auf Seiten der im Block 4 dargestellten Software enthält die Basisstation die folgenden Module:
- Basisstationen-Kommunikationsmodul 5, welches die Untermodule "Daten senden" (SEND) und "Daten empfangen" (RECEIVE) aufweist;
- Auswertungsmodul 6;
- Verbindungsqualitäts-Detektionsmodul 7.

Die Software und die Hardwarekomponenten sind über Applikations-Interfaces (API) 3, 10, 8 miteinander gekoppelt.

Bei einem beispielhaften Aufbau wurden für die Hardware Personalcomputer mit dem Betriebssystem Windows NT oder Windows 98 verwendet. Die drahtgebundene Verbindung zwischen diesen wurde durch ein 100 Mbps Ethernet realisiert. Die drahtlose Verbindung wurde durch ein Produkt der Marke WaveLAN (Turbo/Silver) von Lucent Technology verwirklicht, welches eine 11 Mbps drahtlose Verbindung gemäß dem IEEE Standard 802.11b bereitstellt. Als mobiles Endgerät wurde der Stylistic LT der Firma Fujitsu verwendet.

Aus Gründen der Plattform-Unabhängigkeit wurden die das handover betreffenden Softwareroutinen komplett in JAVA (Version 1.2.2) geschrieben. Die Software wurde ferner in eine lokale Datenbank sowie einen handover Mechanismus (enthaltend die Kommunikation zwischen Basisstationen, die Auswertung 6 und die Verbindungsqualitäts-Detektion 7) aufgeteilt.

Unter der lokalen Datenbank ist dabei im vorliegenden Zusammenhang die minimal erforderliche Funktionalität zur Speicherung und gegebenenfalls Vorverarbeitung von handover bezogenen Daten auf einer Basisstation zu verstehen. Dabei wurde eine Datenbankklasse mit dem Namen "Verbindungstabelle" implementiert. Die folgenden Informationen müssen lokal bearbeitet und daher auch gespeichert werden:
- Zeitstempel für Nachrichten von Basisstationen
- Zeitstempel für Nachrichten von mobilen Endgeräten
- Ergebnisse von Messungen der Verbindungsstärken
- Verbindungszustände
- Zuordnungen zwischen Endgeräten und Basisstationen.

Es müssen interne Datenstrukturen implementiert werden, die diese Datentypen repräsentieren. Die Anzahl der Datenelemente innerhalb dieser Strukturen wurde konstant und für alle Basisstationen gleich definiert. Als Konsequenz hieraus ist nur eine vorgegebene maximale Anzahl an Basisstationen und/oder mobilen Endgeräten mit dem IHDN verbindbar, wobei der obere Grenzwert zum Beispiel von der Anzahl der verfügbaren Geräteadressen abhängt. Die Grenzwerte und andere handover bezogene Konstanten können beispielsweise von einem festen Ort innerhalb der Netzwerkumgebung geladen werden, so dass eine Anpassung durch Änderung der zentralen Parameter möglich ist.

Wie in Figur 5 dargestellt ist, versuchen verschiedene Softwaremodule, von der Datenbank im Speicher 9 zu lesen: Das Datenempfangsmodul 5, das Verbindungsqualitäts-Detektionsmodul 7 und das Auswertmodul 6. Wie weiter unten beschrieben werden wird, werden die letzten beiden Module durch einen internen Zeitplanmechanismus, welcher in der Figur durch eine Uhr symbolisiert wird, initiiert, während das erste Modul durch das externe Ereignis eines einlaufenden Basisstationen-Kommandos oder einer Verbindungszustandsnachricht getriggert wird. Es muss sichergestellt werden, dass ihr möglicherweise paralleler Versuch, Daten zu lesen und/oder zu schreiben, nicht zu irgendeinem Zugriffskonflikt führt. Der Synchronisationsmechanismus von JAVA gewährleistet eine Möglichkeit, dies zu garantieren.

Innerhalb der Datenbankklasse sind verschiedene Vorverarbeitungsroutinen implementiert:
- Eine Routine zur Berechnung des laufenden Mittelwertes der zuletzt eingetragenen Signalstärken, da Feldstärkenmessungen zeitlich gemittelt werden müssen, um Fluktuationen durch die Mehrpfad-Natur der drahtlosen Verbindung zu kompensieren.
- Eine Routine zur Abfrage, ob das letzte Signal von einem bestimmten mobilen Endgerät innerhalb eines vorgegebenen Zeitfensters empfangen wurde oder nicht.
- Eine Routine zur Abfrage, ob das letzte Signal von einer bestimmten Basisstation innerhalb eines vorgegebenen Zeitfensters empfangen wurde oder nicht.
- Eine Funktion, die überprüft, ob die lokale Basisstation den Schwellwert für ein gegebenes mobiles Endgerät im Vergleich zur aktuell zugeordneten Basisstation übersteigt.
- Eine Funktion, die überprüft, ob die lokale Basisstation die beste Signalstärke für ein gegebenes mobiles Endgerät gemessen hat.

Die drei Module der Basisstationen-Kommunikation 5, der Auswertung 6 und der Verbindungsqualitäts-Detektion 7 wurden in einem handover Mechanismus zusammengefasst. Zwischen diesen Modulen bestehen vier hauptsächliche Datenströme:
- Über den Rundsendekanal eingehende Daten (handover Kommandos und Verbindungsstärken-Nachrichten), welche von dem Empfänger des Basisstationen-Kommunikationsmoduls 5 gehandhabt werden, werden unmittelbar zur lokalen Datenbank weitergeleitet.
- Von der Auswertung 6 an den Rundsendekanal gesendete Daten (handover Kommandos und Verbindungsstärkennachrichten).
- Daten betreffend die lokal gemessenen Verbindungsstatus-Ergebnisse, welche durch das Verbindungsqualitäts-Detektionsmodul 7 behandelt werden. Diese Daten werden sowohl zur Sendereinheit des Moduls 5 als auch zur lokalen Datenbank weitergeleitet.
- Daten von der Datenbank zur Auswerteeinheit 6.

Die gestrichelten Pfeile in Figur 5 symbolisieren Anfragekommandos an die entsprechenden Untereinheiten. Die Uhren in Figur 5 symbolisieren, dass die entsprechenden Untereinheiten häufig durch einen (externen) Zeitplan-Mechanismus getriggert werden.

Die Kommunikation zwischen den Basisstationen (Modul 5) basierte im Beispiel wie erwähnt auf dem Ethernet. Sie könnte jedoch auch auf HAVi/IEEE 1394 basieren.

Der Auswertealgorithmus im Modul 6 wurde wie oben beschrieben implementiert. Da er häufig ausgeführt werden muss, wurde ein zusätzlicher Zeitgeber implementiert, welcher den Mechanismus nach vorgegebenen Zeitdauern seit seiner letzten Ausführung aufruft, z.B. alle 2,1 Sekunden.

Die nachfolgende Tabelle zeigt eine graphische Repräsentation eines aktuellen Verbindungsstatus im Hausnetzwerk. In der ersten Zeile des als Tabelle bzw. Matrix dargestellten Zustandes sind die momentan aktiven Basisstationen aufgeführt. Im betrachteten Fall sind dies nur drei Stationen, die durch einen einfachen Index repräsentiert werden. Hinter dem Index kann sich insbesondere ein einheitlicher Identifikator (z.B. IP-Adresse 192.168.20.4) verbergen. Diejenige Basisstation, bei welcher die Software aktuell ausgeführt wird, ist durch einen hochgesetzten Stern gekennzeichnet. Die dargestellte Tabelle befindet sich demnach bei der Basisstation mit dem Index 2.

In ähnlicher Weise zeigt die erste Spalte der Tabelle, welche mobilen Endgeräte momentan im Netzwerk aktiv sind. Wenn eine Basisstation gültige Daten über ihre Verbindung zu einem mobilen Endgerät gesendet hat, wird ein Pluszeichen an der Stelle eingetragen, wo sich die Zeile des Endgerätes und die Spalte der Basisstation schneiden. Wenn es lokal bekannt ist, welche Basisstation momentan dem Endgerät zugeordnet ist, wird ein Mastersymbol "M" an der entsprechenden Stelle eingetragen. Beim der Tabelle zugrundeliegenden Beispiel wird somit das mobile Endgerät mit dem Index 0 von allen drei Basisstationen empfangen, wobei die Basisstation mit dem Index 1 momentan dem Endgerät zugeordnet ist.

| PIA | Basisstationen | | | |
|---|---|---|---|---|
| | 0 | 1 | 2* | - |
| 0 | + | M | + | - |
| - | - | - | - | - |

## Patentansprüche

1. Verfahren zur Zuordnung drahtloser Endgeräte (E1, En) zur Basisstationen (B, B1, B2, Bm) in digitalen Hausnetzwerken, wobei die Verbindungsstärken zwischen den Basisstationen und den Endgeräten gemessen werden und in Abhängigkeit von diesen Messwerten sowie gegebenenfalls von einer bereits bestehenden Zuordnung jedes Endgerät genau einer Basisstation zugeordnet wird,
**dadurch gekennzeichnet,**
**dass** alle Basisstationen voneinander unabhängig auf der Grundlage derselben Informationen und nach demselben Algorithmus die Zuordnung berechnen.

2. Verfahren nach Anspruch 1,
**dadurch gekennzeichnet,**
**dass** jede Basisstation (B, B1, B2, Bm) die sie betreffenden Verbindungsstärken misst und die Messergebnisse an alle Basisstationen mitteilt.

3. Verfahren nach Anspruch 2,
**dadurch gekennzeichnet,**
**dass** eine Basisstation (B, B1, B2, Bm) als nicht verfügbar betrachtet wird, wenn für länger als eine vorgegebene Zeitdauer keine neuen Messergebnisse von ihr mitgeteilt wurden.

4. Verfahren nach mindestens einem der Ansprüche 1 bis 3,
**dadurch gekennzeichnet,**
**dass** ein Endgerät (E1, En) einer neuen Basisstation (B, B1, B2, Bm) zugeordnet wird, wenn die Verbindungsstärke hierzu um ein vorgegebenes Maß (h) besser ist als die Verbindungsstärke zur aktuell zugeordneten Basisstation.

5. Verfahren nach Anspruch 4,
**dadurch gekennzeichnet,**
**dass** das Endgerät (E1, En) erst dann der neuen Basisstation (B, B1, B2, Bm) zugeordnet wird, wenn die Verbindungsstärke zur aktuell zugeordneten Basisstation unter einen vorgegebenen Schwellwert (T_{1,} T_{2,} T₃) fällt.

6. Verfahren nach mindestens einem der Ansprüche 1 bis 5,
**dadurch gekennzeichnet,**
**dass** ein Endgerät (E1, En), welches aktuell keiner Basisstation (B, B1, B2, Bm) zugeordnet ist, derjenigen Basisstation zugeordnet wird, zu der die größte Verbindungsstärke besteht.

7. Verfahren nach mindestens einem der Ansprüche 1 bis 6,
**dadurch gekennzeichnet,**
**dass** eine Basisstation (B, B1, B2, Bm), welche einen Übergang der Zuordnung eines Endgerätes (E, En) von einer anderen Basisstation zu ihr selbst berechnet hat, ein handover-Kommando an alle Basisstationen sendet, welches die Übergabe des betroffenen Endgerätes initiiert.

8. Verfahren nach mindestens einem der Ansprüche 1 bis 7,
**dadurch gekennzeichnet,**
**dass** zwischen den Endgeräten (E1, En) und den Basisstationen (B, B1, B2, Bm) Audiound/oder Videosignale ausgetauscht werden.

9. Digitales Hausnetzwerk mit mehreren Basisstationen (B, B1, B2, Bm) und mehreren drahtlosen Endgeräten (E, En), wobei die Basisstationen enthalten:
a) eine Drahtlos-Kommunikationseinheit (1) für eine drahtlose Kommunikation der Basisstation mit Endgeräten;
b) eine Drahtgebunden-Kommunikationseinheit (2) für eine drahtgebundene Kommunikation der Basisstationen untereinander;
c) eine Messeinheit (7) zur Feststellung der Verbindungsstärken zu den in Reichweite der Basisstation befindlichen Endgeräten;
**dadurch gekennzeichnet,**
**dass** die Basisstationen weiterhin enthalten:
d) einen Speicher (9) zur Speicherung von Verbindungsstärken und Zuordnungen zwischen den Basisstationen und den Endgeräten;
e) eine Steuereinheit (6) zur Berechnung einer Zuordnung der Endgeräte zu den Basisstationen gemäss einem Verfahren nach mindestens einem der Ansprüche 1 bis 9.
